# EUROPEAN PATENT APPLICATION

(11) **EP 4 745 285 A1**
(43) Date of publication of application: **20.05.2026**
(21) Application number: 24838369.7
(22) Date of filing: 03.04.2024
(51) Int. Cl.: D04H 1/724, D04H 1/4291, D01D 5/11, D01F 1/10

(54) **FLASH FABRIC HAVING HIGH TENSILE RESILIENCE**

(30) Priority: 11.07.2023 CN 202310841692
(71) Applicant: Kingwills Advanced Materials Co., Ltd., Nantong, Jiangsu 226017 (CN)
(72) Inventor: YE, Kongmeng, Nantong, Jiangsu 226017 (CN); CHEN, Boyi, Nantong, Jiangsu 226017 (CN)
(74) Representative: Balder IP Law, S.L.
(86) International application number: PCT/CN2024/085863
(87) International publication number: WO 2025/011109

(57) **Abstract**

A flash fabric having a high tensile resilience, including the polyethylene raw material. The gram weight G of the flash fabric is greater than 35 g/m²; the tensile resilience (RT) of the flash fabric is 40%-70%; and the aging toughness Z₅ of the flash fabric is 5-15 (N-m)/g, where Z₅=[R_{M5}×E_{M5}+R_{T5}×E_{T5}]/G. By means of improvements of the spinning raw materials and the process, the comprehensive performance of the product is improved.

## Description

### TECHNICAL FIELD

The present invention belongs to the field of flash technology, and particularly relates to a flash fabric having a high tensile resilience.

### BACKGROUND

Flash spinning is a spinning method in which a polymer solution is placed above the boiling point of a solvent and extruded through a spinneret under high pressure to achieve atmospheric pressure. The polymers are generally polyethylene, polypropylene and their analogs, and the solvents are halogenated hydrocarbons and their analogs, etc. The typical feature of the flash spinning is phase separation, during the dissolution process, the polymer and solvent are stirred and transformed into a homogeneous solution under high temperature and pressure; in a low-pressure chamber, slightly reducing its pressure causes the solution to undergo a certain degree of phase separation, forming two-liquid-phase solutions, one of which is a high polymer-rich phase and the other is a solvent-rich phase; and when the final solution enters the ambient temperature and pressure air through spinneret holes, the solvent is converted into vapor and rapidly separates from the polymer.

Chinese Patent Publication No. CN115491783A relates to a high-strength flash-spun textile and a manufacturing method thereof, where the raw material includes polyethylene, the gram weight is 35-45 g/m², the front burst index is 4-12 kPa·m²/g; the back burst index is 3-12 kPa·m²/g; the printing surface strength is less than 0.42 m/s; the dynamic friction coefficient is 0.08-0.25; and the antibacterial rate is greater than 97%. The high-strength flash-spun textile prepared in the present application has good antibacterial properties, printability and excellent hand feel. Chinese Patent Publication No. CN114990712A relates to a flash fabric and an application thereof, where the wet transverse tensile strength after being soaked in deionized water at 40°C is 1600-1900 N/m, the wet longitudinal tensile strength after being soaked in deionized water at 40°C is 2800-3100 N/m, the dynamic friction coefficient is 0.1-0.25; and the gram weight is 35-45 g/m². The present application can be used in the field of medical protection, various protective clothing, etc. Chinese Patent Publication No. CN114687069A relates to a multifunctional polymer non-woven fabric and a fabric thereof, where the attenuation rate ▲**E** of the elongation at break is 0.20-0.50; ▲E=1-E2/E1; E1 represents the elongation at break of the multifunctional polymer non-woven fabric that has not undergone aging test treatment; E2 is the elongation at break of the multifunctional polymer non-woven fabric after aging test treatment; and the value of E2 is less than 0.5. The process of the present application is simple and widely applicable. Publication No. WO2015195898A1 relates to a paper, which includes a plexifilamentary structure having a normalized Frazier air permeability between 0.002 and 0.2 m³/(m².minute) @ 50 gsm and a normalized water head between 150 and 250 cm @ 50 gsm. European Patent EP3736126A1 relates to a package for providing a sterilizable closed internal environment, and a breathable fibrous non-woven sheet structure for such a structure, wherein the non-woven sheet structure has at least one surface with a pre-sealed embossed pattern; and the particle barrier penetration rate is less than 10%, the Gurley Hill porosity is 40 seconds or less, and the moisture transmission rate is 3500 g/m²/day or higher. Japanese Patent JP6722596B2 relates to a flash-spun plexifilamentary fiber bundle having a total crystaliinity index of less than or equal to 55%, where the flash-spun plexifilamentary fiber strand is less than or equal to 12 m²/g, the crush value is greater than or equal to 0.9 mm/g, the fiber bundle includes predominantly a fiber formed from a polyethylene homopolymer, and the fiber has a monoclinic and orthorhombic structure as determined by an X-ray analysis, and a crystal of the monoclinic structure; and the sheet is characterized in that the degree is greater than 1%. U.S. Patent US20160016385A1 relates to a laminated structure including a microporous film bonded in a face to face relationship with a plexifilamentary non-woven web with an adhesive layer situated in contact with at least a portion of both the microporous film and the non-woven web, where the film contains filler in an amount between 30% and 50% by weight of the total film weight, and between 40% and 90% of polyolefin polymer by weight of the total film weight, the film has a thickness of between 12 and 25 microns, the film is bonded to the plexifilamentary web by adhesive, the laminated structure has a water vapor transmission rate (WVTR) as measured by the EN ISO 12572 Climate C method of greater than or equal to 1000 g/m²/day, the basis weight of the laminated structure is at least 55 *g*/*m²,* the tensile strength of the laminated structure according to EN ISO 13934-1 is at least 35 Newtons in the machine direction, the tensile elongation of the laminated structure according to EN ISO 13934-1 is at least 8% in the machine direction, the tensile strength of the laminated structure according to EN ISO 13934-1 is at least 35 Newtons in the cross direction, the tensile elongation according to EN ISO 13934-1 is at least 15% in the cross direction, and the laminated structure has a hydraulic head according to EN 20811 of at least 200 cm of water.

The flash non-woven fabrics in the prior art have the technical problem of poor tensile resilience and toughness, and through the analysis of the aforementioned patent documents, no characterization and research reports on the tensile resilience and toughness of flash non-woven fabrics have been found.

### Summary

The objective of the present invention is to provide a flash fabric having a high tensile resilience to address the aforementioned problems.

To achieve the aforementioned objective, the present invention adopts the following technical solutions:
A flash fabric having a high tensile resilience, including the polyethylene raw material, the gram weight G of the flash fabric is greater than 35 g/m²; the tensile resilience (RT) of the flash fabric is 40%-70%; and the aging toughness Z₅ of the flash fabric is 5-15 (N·m)/g;
wherein Z₅=[R_{M5}×E_{M5}+R_{T5}×E_{T5}]/G;
the technological process of aging treatment is as follows: (1) placing a sample under the conditions of 25±1°C and the relative humidity of 65±2% for 24 hours, then measuring the tensile strength in the machine direction (MD) (denoted as R_{M}), the tensile strength in the transverse direction (TD) (denoted as R_{T}), the tensile elongation in the MD direction (denoted as E_{M}), and the tensile elongation in the TD direction (denoted as E_{T}) of the sample respectively; then calculating the initial toughness Z₀ according to the formula; (2) then exposing the sample to a dry heat atmosphere at 90±1°C for 6 hours, followed by cooling under the conditions of 25±1°C and the relative humidity of 65±2% for 24 hours; and (3) finally, repeating the operation in step (2), and after four additional treatments, measuring the tensile strength in the MD direction (denoted as R_{M5}), the tensile strength in the TD direction (denoted as R_{T5}), the tensile elongation in the MD direction (denoted as E_{M5}), and the tensile elongation in the TD direction (denoted as E_{T5}) of the sample respectively; and calculating Z₅ according to the formula; the tensile resilience (RT) is tested by the FB1 method of a KES fabric style tester.

The gram weight G of the flash fabric is less than 70 g/m². The gram weight G of the flash fabric is less than 55 g/m². The gram weight G of the flash fabric is less than 50 g/m². The tensile resilience of the flash fabric is 40%-50%. The tensile resilience of the flash fabric is 50%-55%. The tensile resilience of the flash fabric is 55%-60%. The tensile resilience of the flash fabric is 60%-70%. The aging toughness Z₅ of the flash fabric is 5-6 (N·m)/g. The aging toughness Z₅ of the flash fabric is 6-8 (N·m)/g. The aging toughness Z₅ of the flash fabric is 8-10 (N·m)/g. The aging toughness Z₅ of the flash fabric is 10-12 (N·m)/g. The aging toughness Z₅ of the flash fabric is 12-14 (N·m)/g. The aging toughness Z₅ of the flash fabric is 14-15 (N·m)/g.
A flash fabric having a high tensile resilience, where the toughness variation value ΔZ of the flash fabric is 15%-45%;
wherein ΔZ=[Z₀-Z₅]/Z₀×100%
Z₀ is the initial toughness, which is the sample's Z₀=[R_{M}×E_{M}+R_{T}×E_{T}]/G; and Z₅ is the final toughness after high-temperature treatment, and Z₅=[R_{M5}×E_{M5}+R_{T5}×E_{T5}]/G.

The toughness variation value ΔZ of the flash fabric is 15%-20%. The toughness variation value ΔZ of the flash fabric is 20%-25%. The toughness variation value ΔZ of the flash fabric is 25%-30%. The toughness variation value ΔZ of the flash fabric is 30%-35%. The toughness variation value ΔZ of the flash fabric is 35%-40%. The toughness variation value ΔZ of the flash fabric is 40%-45%. A polyethylene film material of the flash fabric is exposed to a dry heat atmosphere at 90°C for 6 hours, then cooled under the conditions of 25±1°C and the relative humidity of 65±2% for 24 hours; then the transmittance T of the flash fabric is measured to be 7%-15%. The transmittance test is conducted according to GBT2410-2008, and the transmittance T is the ratio of the luminous flux passing through the sample to the luminous flux incident on the sample, expressed as a percentage.

The light transmittance T of the flash fabric is 7%-9%. The light transmittance T of the flash fabric is 10%-11%. The light transmittance T of the flash fabric is 11%-13%. The light transmittance T of the flash fabric is 13%-15%.

A flash fabric having a high tensile resilience, wherein a polymer spinning raw material further comprises a spinning aid, and the spinning aid is nano-hollow carbon spheres loaded with zinc oxide. A production method for the flash fabric having a high tensile resilience, which includes the following technical steps:
(I) Preparation of a spinning solution: a polymer spinning raw material is dissolved in a spinning solvent to obtain a spinning solution; the polymer spinning raw material mainly includes polyethylene or polypropylene; the polymer spinning raw material further includes a spinning aid; the spinning aid is nano-hollow carbon spheres loaded with zinc oxide; the mass fraction of the spinning aid in the polymer spinning raw material is 0.3%-0.9%; the mass fraction of the polymer spinning raw material in the spinning dope is 6%-17%; and the spinning solvent is a mixture of several types selected from aliphatic hydrocarbons, alicyclic hydrocarbons, halogenated hydrocarbons, alcohols, esters, ethers, amides and fluorocarbons. The inner hollow diameter of the nano-hollow carbon spheres is 70 nm-90 nm, and the specific surface area is 480 m²/g-550 m²/g. In the present application, the nano-hollow carbon spheres loaded with zinc oxide are distributed in the gaps between the non-woven fabric fibers, and play a buffering role when the non-woven fabric is under stress, thereby improving its strength. However, the distribution of the nano-hollow carbon spheres between the fiber gaps leads to a decrease in the light transmittance.
   A preparation method for the nano-hollow carbon spheres loaded with zinc oxide includes the following specific technical steps: the nano-hollow carbon spheres and zinc chloride are dispersed in an ethanol aqueous solution by means of microwave sonication, then an excess of ammonia water is added, a precipitate is filtered, and the precipitate is dried to obtain the nano-hollow carbon spheres loaded with zinc oxide. The volume fraction of ethanol in the ethanol aqueous solution is 50%-55%; the molar fraction of zinc chloride in the ethanol aqueous solution is 0.3 mol/L-0.45 mol/L; the molar fraction of the nano-hollow carbon spheres in the ethanol aqueous solution is 1 mol/L-1.5 mol/L; the drying conditions are 180°C-220°C, and the drying time is 1-5 hours.
(II) Preparation of the flash fabric: the flash spinning solution prepared in step (I) is passed through a decompression chamber, a spinning pack is arranged at the outlet of the decompression chamber, the flash spinning solution is subjected to flash spinning through the spinning pack to obtain flash fibers, the flash fibers enter a web-laying system through a spinning baffle to obtain an initial fabric; the initial fabric is subjected to preliminary pre-pressing by an upper pre-pressing roll and a lower pre-pressing roll, then enters a water tank, and further passes through a transmission roll; the liquid content is controlled by a left squeeze roll and a right squeeze roll to obtain an intermediate fabric containing a surfactant; and the intermediate fabric containing the surfactant is passed sequentially through an upper pre-hot-rolling roll, a lower pre-hot-rolling roll, an upper hot-rolling roll, and a lower hot-rolling roll, and finally forms into the flash fabric through a winder.

In the present application, after treatment with the deionized aqueous solution of the surfactant, water vapor can easily pass through the fibers during hot rolling, enabling uniform bonding of the flash fibers and thus uniform product distribution, thereby improving the strength. However, the uniform distribution of the flash fibers in the flash non-woven fabric leads to a decrease in the light transmittance. The water tank contains a deionized aqueous solution with a surfactant. When the deionized water solution is pure deionized water, there is a technical problem of local bright spots during the subsequent hot-pressing process, mainly due to the uneven dispersion of deionized water in a woolen cloth. In the present invention, the surfactant is added to overcome the dispersion problem and further reduces the probability of the local bright spots. The mass fraction of the surfactant in the deionized aqueous solution is 10%-20%; the surfactant is hexadecyltrimethylammonium bromide; and the liquid content is 8%-14%, where the liquid content is calculated by the formula: [(wet weight-dry weight)/dry weight]*100%.

Compared with the prior art, the present invention has the following positive effects:
1. The present invention provides a novel spinning process, which enables the prepared flash non-woven fabric to have good tensile resilience and toughness, thereby overcoming the technical problem that flash non-woven fabrics in the prior art generally have poor tensile resilience and toughness.
2. The present invention finds that factors such as the addition amount of the nano-hollow carbon spheres loaded with zinc oxide as the spinning aid and the liquid content of the prepared flash non-woven fabric are closely related to performances of the flash non-woven fabric such as toughness variation value, tensile resilience, light transmittance, etc., and a flash non-woven fabric product with excellent performance in all aspects is obtained by adjusting the parameters.

### BRIEF DESCRIPTION OF THE DRAWINGS

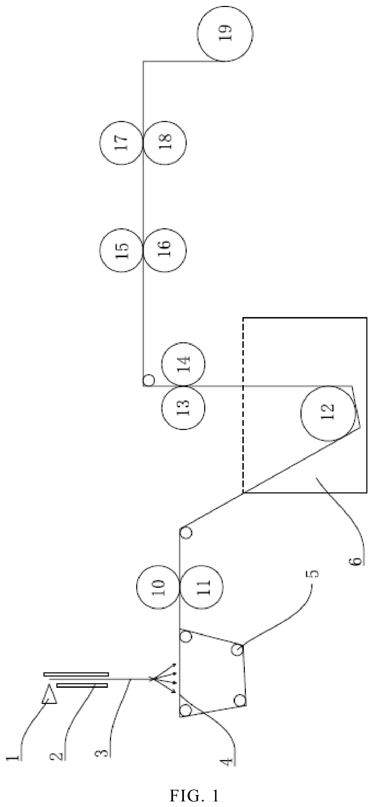

FIG. 1 is a structural schematic diagram of the present invention.

### DETAILED DESCRIPTION

Below, the present invention will be further described in detail in conjunction with the accompanying drawings and specific embodiments of the specification.

### Example 1

This example provided a flash fabric having a high tensile resilience. With reference to FIG. 1, the specific steps were as follows:
(I) Preparation of a spinning solution: a polymer spinning raw material was dissolved in a spinning solvent to obtain a spinning solution; the polymer spinning raw material included polyethylene; a polymer spinning raw material further included a spinning aid; the spinning aid was nano-hollow carbon spheres loaded with zinc oxide; the mass fraction of the spinning aid in the polymer spinning raw material was 0.3%; the mass fraction of the polymer spinning raw material in the spinning solution was 7%; the spinning solvent was a mixture of trichlorofluoromethane, dichloromethane, 1,1-dichloro-1-fluoroethane, 1H,6H-perfluorohexane, and 1H-perfluorohexane at the mass ratio of 3:3:2:1:1. The inner hollow diameter of the nano-hollow carbon spheres was 70 nm-90 nm, and the specific surface area was 480 m²/g-550 m²/g. In the present application, the nano-hollow carbon spheres played a buffering role when a non-woven fabric was under stress. A preparation method for the nano-hollow carbon spheres loaded with zinc oxide included the following specific technical steps: the nano-hollow carbon spheres and zinc chloride were dispersed in an ethanol aqueous solution by means of microwave sonication, then an excess of ammonia water was added, a precipitate was filtered, and the precipitate was dried to obtain the nano-hollow carbon spheres loaded with zinc oxide. The volume fraction of ethanol in the ethanol aqueous solution was 50%; the molar fraction of zinc chloride in the ethanol aqueous solution was 0.3mol/L; the molar fraction of the nano-hollow carbon spheres in the ethanol aqueous solution was 1mol/L; the drying conditions were 180°C-220°C, and the drying time was 2 hours.
(II) Preparation of the flash fabric: the flash spinning solution prepared in step (I) was passed through a decompression chamber, a spinning pack 1 was arranged at the outlet of the decompression chamber, the flash spinning solution was subjected to flash spinning through the spinning pack to obtain flash fibers, the flash fibers 3 entered a web-laying system 4 through a spinning baffle 2 to obtain an initial fabric; the initial fabric was subjected to preliminary pre-pressing by an upper pre-pressing roll 10 and a lower pre-pressing roll 11, then entered a water tank 6, and further passed through a transmission roll 12; the liquid content was controlled by a left squeeze roll 13 and a right squeeze roll 14 to obtain an intermediate fabric containing a surfactant; and the intermediate fabric containing the surfactant was passed sequentially through an upper pre-hot-rolling roll 15, a lower pre-hot-rolling roll 16, an upper hot-rolling roll 17, and a lower hot-rolling roll 18, and finally formed into the flash fabric through a winder 23. The water tank contained a deionized aqueous solution with a surfactant. When the deionized water solution was pure deionized water, there was a technical problem of local bright spots during the subsequent hot-pressing process, mainly due to the uneven dispersion of deionized water in a woolen cloth. In the present invention, the surfactant was added to overcome the dispersion problem and further reduced the probability of the local bright spots. The mass fraction of the surfactant in the deionized aqueous solution was 10%; the surfactant was hexadecyltrimethylammonium bromide; and the liquid content was 8%. The test results of the prepared flash fabric were shown in Table 1.

### Example 2

This example provided a flash fabric having a high tensile resilience. With reference to FIG. 1, the specific steps were as follows:
(I) Preparation of a spinning solution: a polymer spinning raw material was dissolved in a spinning solvent to obtain a spinning solution; the polymer spinning raw material included polyethylene; a polymer spinning raw material further included a spinning aid; the spinning aid was nano-hollow carbon spheres loaded with zinc oxide; the mass fraction of the spinning aid in the polymer spinning raw material was 0.6%; the mass fraction of the polymer spinning raw material in the spinning solution was 9%; the spinning solvent was a mixture of trichlorofluoromethane, dichloromethane, 1,1-dichloro-1-fluoroethane, 1H,6H-perfluorohexane, and 1H-perfluorohexane at the mass ratio of 3:3:2:1:1. The inner hollow diameter of the nano-hollow carbon spheres was 70 nm-90 nm, and the specific surface area was 480 m²/g-550 m²/g. In the present application, the nano-hollow carbon spheres played a buffering role when a non-woven fabric was under stress. A preparation method for the nano-hollow carbon spheres loaded with zinc oxide included the following specific technical steps: the nano-hollow carbon spheres and zinc chloride were dispersed in an ethanol aqueous solution by means of microwave sonication, then an excess of ammonia water was added, a precipitate was filtered, and the precipitate was dried to obtain the nano-hollow carbon spheres loaded with zinc oxide. The volume fraction of ethanol in the ethanol aqueous solution was 52%; the molar fraction of zinc chloride in the ethanol aqueous solution was 0.4 mol/L; the molar fraction of the nano-hollow carbon spheres in the ethanol aqueous solution was 1.25 mol/L; the drying conditions were 180°C-220°C, and the drying time was 3.5 hours.
(II) Preparation of the flash fabric: the flash spinning solution prepared in step (I) was passed through a decompression chamber, a spinning pack 1 was arranged at the outlet of the decompression chamber, the flash spinning solution was subjected to flash spinning through the spinning pack to obtain flash fibers, the flash fibers 3 entered a web-laying system 4 through a spinning baffle 2 to obtain an initial fabric; the initial fabric was subjected to preliminary pre-pressing by an upper pre-pressing roll 10 and a lower pre-pressing roll 11, then entered a water tank 6, and further passed through a transmission roll 12; the liquid content was controlled by a left squeeze roll 13 and a right squeeze roll 14 to obtain an intermediate fabric containing a surfactant; and the intermediate fabric containing the surfactant was passed sequentially through an upper pre-hot-rolling roll 15, a lower pre-hot-rolling roll 16, an upper hot-rolling roll 17, and a lower hot-rolling roll 18, and finally formed into the flash fabric through a winder 23. The water tank contained a deionized aqueous solution with a surfactant. When the deionized water solution was pure deionized water, there was a technical problem of local bright spots during the subsequent hot-pressing process, mainly due to the uneven dispersion of deionized water in a woolen cloth. In the present invention, the surfactant was added to overcome the dispersion problem and further reduced the probability of the local bright spots. The mass fraction of the surfactant in the deionized aqueous solution was 15%; the surfactant was hexadecyltrimethylammonium bromide; and the liquid content was 11%. The test results of the prepared flash fabric were shown in Table 1.

### Example 3

This example provided a flash fabric having a high tensile resilience. With reference to FIG. 1, the specific steps were as follows:
(I) Preparation of a spinning solution: a polymer spinning raw material was dissolved in a spinning solvent to obtain a spinning solution; the polymer spinning raw material included polyethylene; a polymer spinning raw material further included a spinning aid; the spinning aid was nano-hollow carbon spheres loaded with zinc oxide; the mass fraction of the spinning aid in the polymer spinning raw material was 0.9%; the mass fraction of the polymer spinning raw material in the spinning solution was 15%; the spinning solvent was a mixture of trichlorofluoromethane, dichloromethane, 1,1-dichloro-1-fluoroethane, 1H,6H-perfluorohexane, and 1H-perfluorohexane at the mass ratio of 3:3:2:1:1. The inner hollow diameter of the nano-hollow carbon spheres was 70 nm-90 nm, and the specific surface area was 480 m²/g-550 m²/g. In the present application, the nano-hollow carbon spheres played a buffering role when a non-woven fabric was under stress. A preparation method for the nano-hollow carbon spheres loaded with zinc oxide included the following specific technical steps: the nano-hollow carbon spheres and zinc chloride were dispersed in an ethanol aqueous solution by means of microwave sonication, then an excess of ammonia water was added, a precipitate was filtered, and the precipitate was dried to obtain the nano-hollow carbon spheres loaded with zinc oxide. The volume fraction of ethanol in the ethanol aqueous solution was 55%; the molar fraction of zinc chloride in the ethanol aqueous solution was 0.45mol/L; the molar fraction of the nano-hollow carbon spheres in the ethanol aqueous solution was 1.5mol/L; the drying conditions were 180°C-220°C, and the drying time was 5 hours.
(II) Preparation of the flash fabric: the flash spinning solution prepared in step (I) was passed through a decompression chamber, a spinning pack 1 was arranged at the outlet of the decompression chamber, the flash spinning solution was subjected to flash spinning through the spinning pack to obtain flash fibers, the flash fibers 3 entered a web-laying system 4 through a spinning baffle 2 to obtain an initial fabric; the initial fabric was subjected to preliminary pre-pressing by an upper pre-pressing roll 10 and a lower pre-pressing roll 11, then entered a water tank 6, and further passed through a transmission roll 12; the liquid content was controlled by a left squeeze roll 13 and a right squeeze roll 14 to obtain an intermediate fabric containing a surfactant; and the intermediate fabric containing the surfactant was passed sequentially through an upper pre-hot-rolling roll 15, a lower pre-hot-rolling roll 16, an upper hot-rolling roll 17, and a lower hot-rolling roll 18, and finally formed into the flash fabric through a winder 23. The water tank contained a deionized aqueous solution with a surfactant. When the deionized water solution was pure deionized water, there was a technical problem of local bright spots during the subsequent hot-pressing process, mainly due to the uneven dispersion of deionized water in a woolen cloth. In the present invention, the surfactant was added to overcome the dispersion problem and further reduced the probability of the local bright spots. The mass fraction of the surfactant in the deionized aqueous solution was 20%; the surfactant was hexadecyltrimethylammonium bromide; and the liquid content was 14%. The test results of the prepared flash fabric were shown in Table 1.

### Example 4

This example provided a flash fabric having a high tensile resilience. With reference to FIG. 1, the specific steps were as follows:
(I) Preparation of a spinning solution: a polymer spinning raw material was dissolved in a spinning solvent to obtain a spinning solution; the polymer spinning raw material included polypropylene; a polymer spinning raw material further included a spinning aid; the spinning aid was nano-hollow carbon spheres loaded with zinc oxide; the mass fraction of the spinning aid in the polymer spinning raw material was 0.3%; the mass fraction of the polymer spinning raw material in the spinning solution was 7%; the spinning solvent was a mixture of trichlorofluoromethane, dichloromethane, 1,1-dichloro-1-fluoroethane, 1H,6H-perfluorohexane, and 1H-perfluorohexane at the mass ratio of 3:3:2:1:1. The inner hollow diameter of the nano-hollow carbon spheres was 70 nm-90 nm, and the specific surface area was 480 m²/g-550 m²/g. In the present application, the nano-hollow carbon spheres played a buffering role when a non-woven fabric was under stress. A preparation method for the nano-hollow carbon spheres loaded with zinc oxide included the following specific technical steps: the nano-hollow carbon spheres and zinc chloride were dispersed in an ethanol aqueous solution by means of microwave sonication, then an excess of ammonia water was added, a precipitate was filtered, and the precipitate was dried to obtain the nano-hollow carbon spheres loaded with zinc oxide. The volume fraction of ethanol in the ethanol aqueous solution was 50%; the molar fraction of zinc chloride in the ethanol aqueous solution was 0.3mol/L; the molar fraction of the nano-hollow carbon spheres in the ethanol aqueous solution was 1mol/L; the drying conditions were 180°C-220°C, and the drying time was 2 hours.
(II) Preparation of the flash fabric: the flash spinning solution prepared in step (I) was passed through a decompression chamber, a spinning pack 1 was arranged at the outlet of the decompression chamber, the flash spinning solution was subjected to flash spinning through the spinning pack to obtain flash fibers, the flash fibers 3 entered a web-laying system 4 through a spinning baffle 2 to obtain an initial fabric; the initial fabric was subjected to preliminary pre-pressing by an upper pre-pressing roll 10 and a lower pre-pressing roll 11, then entered a water tank 6, and further passed through a transmission roll 12; the liquid content was controlled by a left squeeze roll 13 and a right squeeze roll 14 to obtain an intermediate fabric containing a surfactant; and the intermediate fabric containing the surfactant was passed sequentially through an upper pre-hot-rolling roll 15, a lower pre-hot-rolling roll 16, an upper hot-rolling roll 17, and a lower hot-rolling roll 18, and finally formed into the flash fabric through a winder 23. The water tank contained a deionized aqueous solution with a surfactant, when the deionized water solution was pure deionized water, there was a technical problem of local bright spots during the subsequent hot-pressing process, mainly due to the uneven dispersion of deionized water in a woolen cloth. In the present invention, the surfactant was added to overcome the dispersion problem and further reduced the probability of the local bright spots. The mass fraction of the surfactant in the deionized aqueous solution was 10%; the surfactant was hexadecyltrimethylammonium bromide; and the liquid content was 8%. The test results of the prepared flash fabric were shown in Table 1.

### Example 5

This example provided a flash fabric having a high tensile resilience. With reference to FIG. 1, the specific steps were as follows:
(I) Preparation of a spinning solution: a polymer spinning raw material was dissolved in a spinning solvent to obtain a spinning solution; the polymer spinning raw material included polypropylene; a polymer spinning raw material further included a spinning aid; the spinning aid was nano-hollow carbon spheres loaded with zinc oxide; the mass fraction of the spinning aid in the polymer spinning raw material was 0.6%; the mass fraction of the polymer spinning raw material in the spinning solution was 9%; the spinning solvent was a mixture of trichlorofluoromethane, dichloromethane, 1,1-dichloro-1-fluoroethane, 1H,6H-perfluorohexane, and 1H-perfluorohexane at the mass ratio of 3:3:2:1:1. The inner hollow diameter of the nano-hollow carbon spheres was 70 nm-90 nm, and the specific surface area was 480 m²/g-550 m²/g. In the present application, the nano-hollow carbon spheres played a buffering role when a non-woven fabric was under stress. A preparation method for the nano-hollow carbon spheres loaded with zinc oxide included the following specific technical steps: the nano-hollow carbon spheres and zinc chloride were dispersed in an ethanol aqueous solution by means of microwave sonication, then an excess of ammonia water was added, a precipitate was filtered, and the precipitate was dried to obtain the nano-hollow carbon spheres loaded with zinc oxide. The volume fraction of ethanol in the ethanol aqueous solution was 52%; the molar fraction of zinc chloride in the ethanol aqueous solution was 0.4 mol/L; the molar fraction of the nano-hollow carbon spheres in the ethanol aqueous solution was 1.25 mol/L; the drying conditions were 180°C-220°C, and the drying time was 3.5 hours.
(II) Preparation of the flash fabric: the flash spinning solution prepared in step (I) was passed through a decompression chamber, a spinning pack 1 was arranged at the outlet of the decompression chamber, the flash spinning solution was subjected to flash spinning through the spinning pack to obtain flash fibers, the flash fibers 3 entered a web-laying system 4 through a spinning baffle 2 to obtain an initial fabric; the initial fabric was subjected to preliminary pre-pressing by an upper pre-pressing roll 10 and a lower pre-pressing roll 11, then entered a water tank 6, and further passed through a transmission roll 12; the liquid content was controlled by a left squeeze roll 13 and a right squeeze roll 14 to obtain an intermediate fabric containing a surfactant; and the intermediate fabric containing the surfactant was passed sequentially through an upper pre-hot-rolling roll 15, a lower pre-hot-rolling roll 16, an upper hot-rolling roll 17, and a lower hot-rolling roll 18, and finally formed into the flash fabric through a winder 23. The water tank contained a deionized aqueous solution with a surfactant. When the deionized water solution was pure deionized water, there was a technical problem of local bright spots during the subsequent hot-pressing process, mainly due to the uneven dispersion of deionized water in a woolen cloth. In the present invention, the surfactant was added to overcome the dispersion problem and further reduced the probability of the local bright spots. The mass fraction of the surfactant in the deionized aqueous solution was 15%; the surfactant was hexadecyltrimethylammonium bromide; and the liquid content was 11%. The test results of the prepared flash fabric were shown in Table 1.

### Example 6

This example provided a flash fabric having a high tensile resilience. With reference to FIG. 1, the specific steps were as follows:
(I) Preparation of a spinning solution: a polymer spinning raw material was dissolved in a spinning solvent to obtain a spinning solution; the polymer spinning raw material included polypropylene; a polymer spinning raw material further included a spinning aid; the spinning aid was nano-hollow carbon spheres loaded with zinc oxide; the mass fraction of the spinning aid in the polymer spinning raw material was 0.9%; the mass fraction of the polymer spinning raw material in the spinning solution was 15%; the spinning solvent was a mixture of trichlorofluoromethane, dichloromethane, 1,1-dichloro-1-fluoroethane, 1H,6H-perfluorohexane, and 1H-perfluorohexane at the mass ratio of 3:3:2:1:1. The inner hollow diameter of the nano-hollow carbon spheres was 70 nm-90 nm, and the specific surface area was 480 m²/g-550 m²/g. In the present application, the nano-hollow carbon spheres played a buffering role when a non-woven fabric was under stress. A preparation method for the nano-hollow carbon spheres loaded with zinc oxide included the following specific technical steps: the nano-hollow carbon spheres and zinc chloride were dispersed in an ethanol aqueous solution by means of microwave sonication, then an excess of ammonia water was added, a precipitate was filtered, and the precipitate was dried to obtain the nano-hollow carbon spheres loaded with zinc oxide. The volume fraction of ethanol in the ethanol aqueous solution was 55%; the molar fraction of zinc chloride in the ethanol aqueous solution was 0.45mol/L; the molar fraction of the nano-hollow carbon spheres in the ethanol aqueous solution was 1.5mol/L; the drying conditions were 180°C-220°C, and the drying time was 5 hours.
(II) Preparation of the flash fabric: the flash spinning solution prepared in step (I) was passed through a decompression chamber, a spinning pack 1 was arranged at the outlet of the decompression chamber, the flash spinning solution was subjected to flash spinning through the spinning pack to obtain flash fibers, the flash fibers 3 entered a web-laying system 4 through a spinning baffle 2 to obtain an initial fabric; the initial fabric was subjected to preliminary pre-pressing by an upper pre-pressing roll 10 and a lower pre-pressing roll 11, then entered a water tank 6, and further passed through a transmission roll 12; the liquid content was controlled by a left squeeze roll 13 and a right squeeze roll 14 to obtain an intermediate fabric containing a surfactant; and the intermediate fabric containing the surfactant was passed sequentially through an upper pre-hot-rolling roll 15, a lower pre-hot-rolling roll 16, an upper hot-rolling roll 17, and a lower hot-rolling roll 18, and finally formed into the flash fabric through a winder 23. The water tank contained a deionized aqueous solution with a surfactant. When the deionized water solution was pure deionized water, there was a technical problem of local bright spots during the subsequent hot-pressing process, mainly due to the uneven dispersion of deionized water in a woolen cloth. In the present invention, the surfactant was added to overcome the dispersion problem and further reduced the probability of the local bright spots. The mass fraction of the surfactant in the deionized aqueous solution was 20%; the surfactant was hexadecyltrimethylammonium bromide; and the liquid content was 14%. The test results of the prepared flash fabric were shown in Table 1.

### Comparative Example 1

This comparative example provided a flash fabric. With reference to FIG. 1, the specific steps were as follows:
(I) Preparation of a spinning solution: a polymer spinning raw material was dissolved in a spinning solvent to obtain a spinning solution; the polymer spinning raw material included polyethylene; the mass fraction of the polymer spinning raw material in the spinning solution was 9%; the spinning solvent was a mixture of trichlorofluoromethane, dichloromethane, 1,1-dichloro-1-fluoroethane, 1H,6H-perfluorohexane, and 1H-perfluorohexane at the mass ratio of 3:3:2:1:1.
(II) Preparation of the flash fabric: the flash spinning solution prepared in step (I) was passed through a decompression chamber, a spinning pack 1 was arranged at the outlet of the decompression chamber, the flash spinning solution was subjected to flash spinning through the spinning pack to obtain flash fibers, the flash fibers 3 entered a web-laying system 4 through a spinning baffle 2 to obtain an initial fabric; the initial fabric was subjected to preliminary pre-pressing by an upper pre-pressing roll 10 and a lower pre-pressing roll 11, then entered a water tank 6, and further passed through a transmission roll 12; the liquid content was controlled by a left squeeze roll 13 and a right squeeze roll 14 to obtain an intermediate fabric containing a surfactant; and the intermediate fabric containing the surfactant was passed sequentially through an upper pre-hot-rolling roll 15, a lower pre-hot-rolling roll 16, an upper hot-rolling roll 17, and a lower hot-rolling roll 18, and finally formed into the flash fabric through a winder 23. The water tank contained a deionized aqueous solution with a surfactant. When the deionized water solution was pure deionized water, there was a technical problem of local bright spots during the subsequent hot-pressing process, mainly due to the uneven dispersion of deionized water in a woolen cloth. In the present invention, the surfactant was added to overcome the dispersion problem and further reduced the probability of the local bright spots. The mass fraction of the surfactant in the deionized aqueous solution was 15%; the surfactant was hexadecyltrimethylammonium bromide; and the liquid content was 11%. The test results of the prepared flash fabric were shown in Table 1.

### Comparative Example 2

This comparative example provided a flash fabric. With reference to FIG. 1, the specific steps were as follows:
(I) Preparation of a spinning solution: a polymer spinning raw material was dissolved in a spinning solvent to obtain a spinning solution; the polymer spinning raw material included polyethylene; a polymer spinning raw material further included a spinning aid; the spinning aid was nano-hollow carbon spheres loaded with zinc oxide; the mass fraction of the spinning aid in the polymer spinning raw material was 0.15%; the mass fraction of the polymer spinning raw material in the spinning solution was 9%; the spinning solvent was a mixture of trichlorofluoromethane, dichloromethane, 1,1-dichloro-1-fluoroethane, 1H,6H-perfluorohexane, and 1H-perfluorohexane at the mass ratio of 3:3:2:1:1. The inner hollow diameter of the nano-hollow carbon spheres was 70 nm-90 nm, and the specific surface area was 480 m²/g-550 m²/g. In the present application, the nano-hollow carbon spheres played a buffering role when a non-woven fabric was under stress. A preparation method for the nano-hollow carbon spheres loaded with zinc oxide included the following specific technical steps: the nano-hollow carbon spheres and zinc chloride were dispersed in an ethanol aqueous solution by means of microwave sonication, then an excess of ammonia water was added, a precipitate was filtered, and the precipitate was dried to obtain the nano-hollow carbon spheres loaded with zinc oxide. The volume fraction of ethanol in the ethanol aqueous solution was 52%; the molar fraction of zinc chloride in the ethanol aqueous solution was 0.4 mol/L; the molar fraction of the nano-hollow carbon spheres in the ethanol aqueous solution was 1.25 mol/L; the drying conditions were 180°C-220°C, and the drying time was 3.5 hours.
(II) Preparation of the flash fabric: the flash spinning solution prepared in step (I) was passed through a decompression chamber, a spinning pack 1 was arranged at the outlet of the decompression chamber, the flash spinning solution was subjected to flash spinning through the spinning pack to obtain flash fibers, the flash fibers 3 entered a web-laying system 4 through a spinning baffle 2 to obtain an initial fabric; the initial fabric was subjected to preliminary pre-pressing by an upper pre-pressing roll 10 and a lower pre-pressing roll 11, then entered a water tank 6, and further passed through a transmission roll 12; the liquid content was controlled by a left squeeze roll 13 and a right squeeze roll 14 to obtain an intermediate fabric containing a surfactant; and the intermediate fabric containing the surfactant was passed sequentially through an upper pre-hot-rolling roll 15, a lower pre-hot-rolling roll 16, an upper hot-rolling roll 17, and a lower hot-rolling roll 18, and finally formed into the flash fabric through a winder 23. The water tank contained a deionized aqueous solution with a surfactant. When the deionized water solution was pure deionized water, there was a technical problem of local bright spots during the subsequent hot-pressing process, mainly due to the uneven dispersion of deionized water in a woolen cloth. In the present invention, the surfactant was added to overcome the dispersion problem and further reduced the probability of the local bright spots. The mass fraction of the surfactant in the deionized aqueous solution was 15%; the surfactant was hexadecyltrimethylammonium bromide; and the liquid content was 11%. The test results of the prepared flash fabric were shown in Table 1.

### Comparative Example 3

This comparative example provided a flash fabric. With reference to FIG. 1, the specific steps were as follows:
(I) Preparation of a spinning solution: a polymer spinning raw material was dissolved in a spinning solvent to obtain a spinning solution; the polymer spinning raw material included polyethylene; a polymer spinning raw material further included a spinning aid; the spinning aid was nano-hollow carbon spheres loaded with zinc oxide; the mass fraction of the spinning aid in the polymer spinning raw material was 1%; the mass fraction of the polymer spinning raw material in the spinning solution was 9%; the spinning solvent was a mixture of trichlorofluoromethane, dichloromethane, 1,1-dichloro-1-fluoroethane, 1H,6H-perfluorohexane, and 1H-perfluorohexane at the mass ratio of 3:3:2:1:1. The inner hollow diameter of the nano-hollow carbon spheres was 70 nm-90 nm, and the specific surface area was 480 m²/g-550 m²/g. In the present application, the nano-hollow carbon spheres played a buffering role when a non-woven fabric was under stress. A preparation method for the nano-hollow carbon spheres loaded with zinc oxide included the following specific technical steps: the nano-hollow carbon spheres and zinc chloride were dispersed in an ethanol aqueous solution by means of microwave sonication, then an excess of ammonia water was added, a precipitate was filtered, and the precipitate was dried to obtain the nano-hollow carbon spheres loaded with zinc oxide. The volume fraction of ethanol in the ethanol aqueous solution was 52%; the molar fraction of zinc chloride in the ethanol aqueous solution was 0.4 mol/L; the molar fraction of the nano-hollow carbon spheres in the ethanol aqueous solution was 1.25 mol/L; the drying conditions were 180°C-220°C, and the drying time was 3.5 hours.
(II) Preparation of the flash fabric: the flash spinning solution prepared in step (I) was passed through a decompression chamber, a spinning pack 1 was arranged at the outlet of the decompression chamber, the flash spinning solution was subjected to flash spinning through the spinning pack to obtain flash fibers, the flash fibers 3 entered a web-laying system 4 through a spinning baffle 2 to obtain an initial fabric; the initial fabric was subjected to preliminary pre-pressing by an upper pre-pressing roll 10 and a lower pre-pressing roll 11, then entered a water tank 6, and further passed through a transmission roll 12; the liquid content was controlled by a left squeeze roll 13 and a right squeeze roll 14 to obtain an intermediate fabric containing a surfactant; and the intermediate fabric containing the surfactant was passed sequentially through an upper pre-hot-rolling roll 15, a lower pre-hot-rolling roll 16, an upper hot-rolling roll 17, and a lower hot-rolling roll 18, and finally formed into the flash fabric through a winder 23. The water tank contained a deionized aqueous solution with a surfactant. When the deionized water solution was pure deionized water, there was a technical problem of local bright spots during the subsequent hot-pressing process, mainly due to the uneven dispersion of deionized water in a woolen cloth. In the present invention, the surfactant was added to overcome the dispersion problem and further reduced the probability of the local bright spots. The mass fraction of the surfactant in the deionized aqueous solution was 15%; the surfactant was hexadecyltrimethylammonium bromide; and the liquid content was 11%. The test results of the prepared flash fabric were shown in Table 1.

### Comparative Example 4

This comparative example provided a flash fabric. With reference to FIG. 1, the specific steps were as follows:
(I) Preparation of a spinning solution: a polymer spinning raw material was dissolved in a spinning solvent to obtain a spinning solution; the polymer spinning raw material included polyethylene; a polymer spinning raw material further included a spinning aid; the spinning aid was nano-hollow carbon spheres loaded with zinc oxide; the mass fraction of the spinning aid in the polymer spinning raw material was 1.2%; the mass fraction of the polymer spinning raw material in the spinning solution was 9%; the spinning solvent was a mixture of trichlorofluoromethane, dichloromethane, 1,1-dichloro-1-fluoroethane, 1H,6H-perfluorohexane, and 1H-perfluorohexane at the mass ratio of 3:3:2:1:1. The inner hollow diameter of the nano-hollow carbon spheres was 70 nm-90 nm, and the specific surface area was 480 m²/g-550 m²/g. In the present application, the nano-hollow carbon spheres played a buffering role when a non-woven fabric was under stress. A preparation method for the nano-hollow carbon spheres loaded with zinc oxide included the following specific technical steps: the nano-hollow carbon spheres and zinc chloride were dispersed in an ethanol aqueous solution by means of microwave sonication, then an excess of ammonia water was added, a precipitate was filtered, and the precipitate was dried to obtain the nano-hollow carbon spheres loaded with zinc oxide. The volume fraction of ethanol in the ethanol aqueous solution was 52%; the molar fraction of zinc chloride in the ethanol aqueous solution was 0.4 mol/L; the molar fraction of the nano-hollow carbon spheres in the ethanol aqueous solution was 1.25 mol/L; the drying conditions were 180°C-220°C, and the drying time was 3.5 hours.
(II) Preparation of the flash fabric: the flash spinning solution prepared in step (I) was passed through a decompression chamber, a spinning pack 1 was arranged at the outlet of the decompression chamber, the flash spinning solution was subjected to flash spinning through the spinning pack to obtain flash fibers, the flash fibers 3 entered a web-laying system 4 through a spinning baffle 2 to obtain an initial fabric; the initial fabric was subjected to preliminary pre-pressing by an upper pre-pressing roll 10 and a lower pre-pressing roll 11, then entered a water tank 6, and further passed through a transmission roll 12; the liquid content was controlled by a left squeeze roll 13 and a right squeeze roll 14 to obtain an intermediate fabric containing a surfactant; and the intermediate fabric containing the surfactant was passed sequentially through an upper pre-hot-rolling roll 15, a lower pre-hot-rolling roll 16, an upper hot-rolling roll 17, and a lower hot-rolling roll 18, and finally formed into the flash fabric through a winder 23. The water tank contained a deionized aqueous solution with a surfactant. When the deionized water solution was pure deionized water, there was a technical problem of local bright spots during the subsequent hot-pressing process, mainly due to the uneven dispersion of deionized water in a woolen cloth. In the present invention, the surfactant was added to overcome the dispersion problem and further reduced the probability of the local bright spots. The mass fraction of the surfactant in the deionized aqueous solution was 15%; the surfactant was hexadecyltrimethylammonium bromide; and the liquid content was 11%. The test results of the prepared flash fabric were shown in Table 1.

### Comparative Example 5

This comparative example provided a flash fabric. With reference to FIG. 1, the specific steps were as follows:
(I) Preparation of a spinning solution: a polymer spinning raw material was dissolved in a spinning solvent to obtain a spinning solution; the polymer spinning raw material included polyethylene; a polymer spinning raw material further included a spinning aid; the spinning aid was nano-hollow carbon spheres loaded with zinc oxide; the mass fraction of the spinning aid in the polymer spinning raw material was 0.6%; the mass fraction of the polymer spinning raw material in the spinning solution was 9%; the spinning solvent was a mixture of trichlorofluoromethane, dichloromethane, 1,1-dichloro-1-fluoroethane, 1H,6H-perfluorohexane, and 1H-perfluorohexane at the mass ratio of 3:3:2:1:1. The inner hollow diameter of the nano-hollow carbon spheres was 70 nm-90 nm, and the specific surface area was 480 m²/g-550 m²/g. In the present application, the nano-hollow carbon spheres played a buffering role when a non-woven fabric was under stress. A preparation method for the nano-hollow carbon spheres loaded with zinc oxide included the following specific technical steps: the nano-hollow carbon spheres and zinc chloride were dispersed in an ethanol aqueous solution by means of microwave sonication, then an excess of ammonia water was added, a precipitate was filtered, and the precipitate was dried to obtain the nano-hollow carbon spheres loaded with zinc oxide. The volume fraction of ethanol in the ethanol aqueous solution was 52%; the molar fraction of zinc chloride in the ethanol aqueous solution was 0.4 mol/L; the molar fraction of the nano-hollow carbon spheres in the ethanol aqueous solution was 1.25 mol/L; the drying conditions were 180°C-220°C, and the drying time was 3.5 hours.
(II) Preparation of the flash fabric: the flash spinning solution prepared in step (I) was passed through a decompression chamber, a spinning pack 1 was arranged at the outlet of the decompression chamber, the flash spinning solution was subjected to flash spinning through the spinning pack to obtain flash fibers, the flash fibers 3 entered a web-laying system 4 through a spinning baffle 2 to obtain an initial fabric; the initial fabric was subjected to preliminary pre-pressing by an upper pre-pressing roll 10 and a lower pre-pressing roll 11, then entered a water tank 6, and further passed through a transmission roll 12; the liquid content was controlled by a left squeeze roll 13 and a right squeeze roll 14 to obtain an intermediate fabric containing a surfactant; the intermediate fabric containing the surfactant was passed sequentially through an upper pre-hot-rolling roll 15, a lower pre-hot-rolling roll 16, an upper hot-rolling roll 17, and a lower hot-rolling roll 18, and finally formed into the flash fabric through a winder 23; and the water tank contained deionized water. The prepared flash fabric had multiple bright spots locally, which affected the final use of a product. The liquid content was 11%. The test results of the prepared flash fabric were shown in Table 1.

### Comparative Example 6

This comparative example provided a flash fabric. With reference to FIG. 1, the specific steps were as follows:
(I) Preparation of a spinning solution: a polymer spinning raw material was dissolved in a spinning solvent to obtain a spinning solution; the polymer spinning raw material included polyethylene; a polymer spinning raw material further included a spinning aid; the spinning aid was nano-hollow carbon spheres loaded with zinc oxide; the mass fraction of the spinning aid in the polymer spinning raw material was 0.6%; the mass fraction of the polymer spinning raw material in the spinning solution was 9%; the spinning solvent was a mixture of trichlorofluoromethane, dichloromethane, 1,1-dichloro-1-fluoroethane, 1H,6H-perfluorohexane, and 1H-perfluorohexane at the mass ratio of 3:3:2:1:1. The inner hollow diameter of the nano-hollow carbon spheres was 70 nm-90 nm, and the specific surface area was 480 m²/g-550 m²/g. In the present application, the nano-hollow carbon spheres played a buffering role when a non-woven fabric was under stress. A preparation method for the nano-hollow carbon spheres loaded with zinc oxide included the following specific technical steps: the nano-hollow carbon spheres and zinc chloride were dispersed in an ethanol aqueous solution by means of microwave sonication, then an excess of ammonia water was added, a precipitate was filtered, and the precipitate was dried to obtain the nano-hollow carbon spheres loaded with zinc oxide. The volume fraction of ethanol in the ethanol aqueous solution was 52%; the molar fraction of zinc chloride in the ethanol aqueous solution was 0.4 mol/L; the molar fraction of the nano-hollow carbon spheres in the ethanol aqueous solution was 1.25 mol/L; the drying conditions were 180°C-220°C, and the drying time was 3.5 hours.
(II) Preparation of the flash fabric: the flash spinning solution prepared in step (I) was passed through a decompression chamber, a spinning pack 1 was arranged at the outlet of the decompression chamber, the flash spinning solution was subjected to flash spinning through the spinning pack to obtain flash fibers, the flash fibers 3 entered a web-laying system 4 through a spinning baffle 2 to obtain an initial fabric; the initial fabric was subjected to preliminary pre-pressing by an upper pre-pressing roll 10 and a lower pre-pressing roll 11, then entered a water tank 6, and further passed through a transmission roll 12; the liquid content was controlled by a left squeeze roll 13 and a right squeeze roll 14 to obtain an intermediate fabric containing a surfactant; and the intermediate fabric containing the surfactant was passed sequentially through an upper pre-hot-rolling roll 15, a lower pre-hot-rolling roll 16, an upper hot-rolling roll 17, and a lower hot-rolling roll 18, and finally formed into the flash fabric through a winder 23. The water tank contained a deionized aqueous solution with a surfactant. When the deionized water solution was pure deionized water, there was a technical problem of local bright spots during the subsequent hot-pressing process, mainly due to the uneven dispersion of deionized water in a woolen cloth. In the present invention, the surfactant was added to overcome the dispersion problem and further reduced the probability of the local bright spots. The mass fraction of the surfactant in the deionized aqueous solution was 15%; the surfactant was hexadecyltrimethylammonium bromide; and the liquid content was 3%. The test results of the prepared flash fabric were shown in Table 1.

### Comparative Example 7

This comparative example provided a flash fabric. With reference to FIG. 1, the specific steps were as follows:
(I) Preparation of a spinning solution: a polymer spinning raw material was dissolved in a spinning solvent to obtain a spinning solution; the polymer spinning raw material included polyethylene; a polymer spinning raw material further included a spinning aid; the spinning aid was nano-hollow carbon spheres loaded with zinc oxide; the mass fraction of the spinning aid in the polymer spinning raw material was 0.6%; the mass fraction of the polymer spinning raw material in the spinning solution was 9%; the spinning solvent was a mixture of trichlorofluoromethane, dichloromethane, 1,1-dichloro-1-fluoroethane, 1H,6H-perfluorohexane, and 1H-perfluorohexane at the mass ratio of 3:3:2:1:1. The inner hollow diameter of the nano-hollow carbon spheres was 70 nm-90 nm, and the specific surface area was 480 m²/g-550 m²/g. In the present application, the nano-hollow carbon spheres played a buffering role when a non-woven fabric was under stress. A preparation method for the nano-hollow carbon spheres loaded with zinc oxide included the following specific technical steps: the nano-hollow carbon spheres and zinc chloride were dispersed in an ethanol aqueous solution by means of microwave sonication, then an excess of ammonia water was added, a precipitate was filtered, and the precipitate was dried to obtain the nano-hollow carbon spheres loaded with zinc oxide. The volume fraction of ethanol in the ethanol aqueous solution was 52%; the molar fraction of zinc chloride in the ethanol aqueous solution was 0.4 mol/L; the molar fraction of the nano-hollow carbon spheres in the ethanol aqueous solution was 1.25 mol/L; the drying conditions were 180°C-220°C, and the drying time was 3.5 hours.
(II) Preparation of the flash fabric: the flash spinning solution prepared in step (I) was passed through a decompression chamber, a spinning pack 1 was arranged at the outlet of the decompression chamber, the flash spinning solution was subjected to flash spinning through the spinning pack to obtain flash fibers, the flash fibers 3 entered a web-laying system 4 through a spinning baffle 2 to obtain an initial fabric; the initial fabric was subjected to preliminary pre-pressing by an upper pre-pressing roll 10 and a lower pre-pressing roll 11, then entered a water tank 6, and further passed through a transmission roll 12; the liquid content was controlled by a left squeeze roll 13 and a right squeeze roll 14 to obtain an intermediate fabric containing a surfactant; and the intermediate fabric containing the surfactant was passed sequentially through an upper pre-hot-rolling roll 15, a lower pre-hot-rolling roll 16, an upper hot-rolling roll 17, and a lower hot-rolling roll 18, and finally formed into the flash fabric through a winder 23. The water tank contained a deionized aqueous solution with a surfactant. When the deionized water solution was pure deionized water, there was a technical problem of local bright spots during the subsequent hot-pressing process, mainly due to the uneven dispersion of deionized water in a woolen cloth. In the present invention, the surfactant was added to overcome the dispersion problem and further reduced the probability of the local bright spots. The mass fraction of the surfactant in the deionized aqueous solution was 15%; the surfactant was hexadecyltrimethylammonium bromide; and the liquid content was 6%. The test results of the prepared flash fabric were shown in Table 1.

### Comparative Example 8

This comparative example provided a flash fabric. With reference to FIG. 1, the specific steps were as follows:
(I) Preparation of a spinning solution: a polymer spinning raw material was dissolved in a spinning solvent to obtain a spinning solution; the polymer spinning raw material included polyethylene; a polymer spinning raw material further included a spinning aid; the spinning aid was nano-hollow carbon spheres loaded with zinc oxide; the mass fraction of the spinning aid in the polymer spinning raw material was 0.6%; the mass fraction of the polymer spinning raw material in the spinning solution was 9%; the spinning solvent was a mixture of trichlorofluoromethane, dichloromethane, 1,1-dichloro-1-fluoroethane, 1H,6H-perfluorohexane, and 1H-perfluorohexane at the mass ratio of 3:3:2:1:1. The inner hollow diameter of the nano-hollow carbon spheres was 70 nm-90 nm, and the specific surface area was 480 m²/g-550 m²/g. In the present application, the nano-hollow carbon spheres played a buffering role when a non-woven fabric was under stress. A preparation method for the nano-hollow carbon spheres loaded with zinc oxide included the following specific technical steps: the nano-hollow carbon spheres and zinc chloride were dispersed in an ethanol aqueous solution by means of microwave sonication, then an excess of ammonia water was added, a precipitate was filtered, and the precipitate was dried to obtain the nano-hollow carbon spheres loaded with zinc oxide. The volume fraction of ethanol in the ethanol aqueous solution was 52%; the molar fraction of zinc chloride in the ethanol aqueous solution was 0.4 mol/L; the molar fraction of the nano-hollow carbon spheres in the ethanol aqueous solution was 1.25 mol/L; the drying conditions were 180°C-220°C, and the drying time was 3.5 hours.
(II) Preparation of the flash fabric: the flash spinning solution prepared in step (I) was passed through a decompression chamber, a spinning pack 1 was arranged at the outlet of the decompression chamber, the flash spinning solution was subjected to flash spinning through the spinning pack to obtain flash fibers, the flash fibers 3 entered a web-laying system 4 through a spinning baffle 2 to obtain an initial fabric; the initial fabric was subjected to preliminary pre-pressing by an upper pre-pressing roll 10 and a lower pre-pressing roll 11, then entered a water tank 6, and further passed through a transmission roll 12; the liquid content was controlled by a left squeeze roll 13 and a right squeeze roll 14 to obtain an intermediate fabric containing a surfactant; and the intermediate fabric containing the surfactant was passed sequentially through an upper pre-hot-rolling roll 15, a lower pre-hot-rolling roll 16, an upper hot-rolling roll 17, and a lower hot-rolling roll 18, and finally formed into the flash fabric through a winder 23. The water tank contained a deionized aqueous solution with a surfactant. When the deionized water solution was pure deionized water, there was a technical problem of local bright spots during the subsequent hot-pressing process, mainly due to the uneven dispersion of deionized water in a woolen cloth. In the present invention, the surfactant was added to overcome the dispersion problem and further reduced the probability of the local bright spots. The mass fraction of the surfactant in the deionized aqueous solution was 15%; the surfactant was hexadecyltrimethylammonium bromide; and the liquid content was 17%. The test results of the prepared flash fabric were shown in Table 1.

### Comparative Example 9

This comparative example provided a flash fabric. With reference to FIG. 1, the specific steps were as follows:
(I) Preparation of a spinning solution: a polymer spinning raw material was dissolved in a spinning solvent to obtain a spinning solution; the polymer spinning raw material included polyethylene; a polymer spinning raw material further included a spinning aid; the spinning aid was nano-hollow carbon spheres loaded with zinc oxide; the mass fraction of the spinning aid in the polymer spinning raw material was 0.6%; the mass fraction of the polymer spinning raw material in the spinning solution was 9%; the spinning solvent was a mixture of trichlorofluoromethane, dichloromethane, 1,1-dichloro-1-fluoroethane, 1H,6H-perfluorohexane, and 1H-perfluorohexane at the mass ratio of 3:3:2:1:1. The inner hollow diameter of the nano-hollow carbon spheres was 70 nm-90 nm, and the specific surface area was 480 m²/g-550 m²/g. In the present application, the nano-hollow carbon spheres played a buffering role when a non-woven fabric was under stress. A preparation method for the nano-hollow carbon spheres loaded with zinc oxide included the following specific technical steps: the nano-hollow carbon spheres and zinc chloride were dispersed in an ethanol aqueous solution by means of microwave sonication, then an excess of ammonia water was added, a precipitate was filtered, and the precipitate was dried to obtain the nano-hollow carbon spheres loaded with zinc oxide. The volume fraction of ethanol in the ethanol aqueous solution was 52%; the molar fraction of zinc chloride in the ethanol aqueous solution was 0.4 mol/L; the molar fraction of the nano-hollow carbon spheres in the ethanol aqueous solution was 1.25 mol/L; the drying conditions were 180°C-220°C, and the drying time was 3.5 hours.
(II) Preparation of the flash fabric: the flash spinning solution prepared in step (I) was passed through a decompression chamber, a spinning pack 1 was arranged at the outlet of the decompression chamber, the flash spinning solution was subjected to flash spinning through the spinning pack to obtain flash fibers, the flash fibers 3 entered a web-laying system 4 through a spinning baffle 2 to obtain an initial fabric; the initial fabric was subjected to preliminary pre-pressing by an upper pre-pressing roll 10 and a lower pre-pressing roll 11, then entered a water tank 6, and further passed through a transmission roll 12; the liquid content was controlled by a left squeeze roll 13 and a right squeeze roll 14 to obtain an intermediate fabric containing a surfactant; and the intermediate fabric containing the surfactant was passed sequentially through an upper pre-hot-rolling roll 15, a lower pre-hot-rolling roll 16, an upper hot-rolling roll 17, and a lower hot-rolling roll 18, and finally formed into the flash fabric through a winder 23. The water tank contained a deionized aqueous solution with a surfactant. When the deionized water solution was pure deionized water, there was a technical problem of local bright spots during the subsequent hot-pressing process, mainly due to the uneven dispersion of deionized water in a woolen cloth. In the present invention, the surfactant was added to overcome the dispersion problem and further reduced the probability of the local bright spots. The mass fraction of the surfactant in the deionized aqueous solution was 15%; the surfactant was hexadecyltrimethylammonium bromide; and the liquid content was 20%. The test results of the prepared flash fabric were shown in Table 1.

**Table 1 Performance test results**

| | Exam ple 1 | Exa mple 2 | Exa mple 3 | Exa mple 4 | Exa mple 5 | Exa mple 6 | Com para tive Exa mple 1 | Com para tive Exa mple 2 | Com para tive Exa mple 3 | Com para tive Exa mple 4 | Com para tive Exa mple 5 | Com para tive Exa mple 6 | Com parat ive Exa mple 7 | Com parat ive Exa mple 8 | Com parat ive Exa mple 9 |
|---|---|---|---|---|---|---|---|---|---|---|---|---|---|---|---|
| RT/% | 64 | 56 | 47 | 44 | 36 | 27 | 71 | 69 | 35 | 30 | 23 | 30 | 36 | 77 | 79 |
| Z₀ (N·m)/ g | 12.2 | 15.5 | 16.9 | 19.6 | 23.5 | 25.9 | 6.3 | 9.6 | 17.5 | 17.9 | 5.6 | 8.7 | 12.5 | 17.3 | 17.6 |
| Z₅ (N·m)/ g | 7.4 | 10.9 | 13.3 | 11.1 | 15.9 | 19.5 | 3.1 | 4.9 | 14.5 | 15.1 | 2.5 | 4.3 | 6.6 | 13.8 | 14.4 |
| ΔZ | 0.39 | 0.30 | 0.21 | 0.43 | 0.32 | 0.25 | 0.51 | 0.49 | 0.17 | 0.16 | 0.55 | 0.51 | 0.47 | 0.20 | 0.18 |
| T/% | 12.5 | 10.1 | 9.4 | 13.5 | 11.1 | 10.4 | 21.3 | 18.7 | 7.9 | 7.1 | 6.7 | 7.8 | 8.5 | 17.9 | 19.7 |

Result analysis: it could be seen from the comparison of the above data that increasing the amount of the spinning aid could reduce the toughness variation value of the flash non-woven fabric, but at the same time, it would lead to a decrease in tensile resilience and light transmittance. The higher the liquid content of the flash non-woven fabric, the lower its toughness variation value, while the higher the light transmittance and tensile resilience. Therefore, a flash non-woven fabric product with excellent performance in terms of toughness variation value, tensile resilience, light transmittance, etc., could be obtained by adjusting factors such as the addition amount of the nano-hollow carbon spheres loaded with zinc oxide as the spinning aid and the liquid content of the prepared flash non-woven fabric, which achieved the expected purpose of the present invention.

The specific embodiments described herein were merely illustrative of the spirit of the present invention. Those skilled in the technical field to which the present invention pertained might make various modifications, additions, or substitutions to the described specific embodiments in similar manners, without departing from the spirit of the present invention or exceeding the scope defined by the appended claims.

Although terms such as a spinning pack 1, a baffle 2, a flash fiber 3, a web-laying machine 4, a guide roll 5, a water tank 6, an upper pre-pressing roll 10, a lower pre-pressing roll 11, a transmission roll 12, a left squeeze roll 13, a right squeeze roll 14, an upper pre-hot-rolling roll 15, a lower pre-hot-rolling roll 16, an upper hot-rolling roll 17, a lower hot-rolling roll 18, and a winder 19 were used frequently herein, the possibility of using other terms was not excluded. These terms were used merely to describe and explain the essence of the present invention more conveniently; and interpreting them as any additional limitation was contrary to the spirit of the present invention.

## Claims

1. A flash fabric having a high tensile resilience, comprising the polyethylene raw material,
the gram weight G of the flash fabric is greater than 35 g/m²;
the tensile resilience (RT) of the flash fabric is 40%-70%; and
the aging toughness Z₅ of the flash fabric is 5-15 (N·m)/g;
wherein Z₅=[R_{M5}×E_{M5}+R_{T5}×E_{T5}]/G;
the technological process of aging treatment is as follows:
(1) placing a sample under the conditions of 25±1°C and the relative humidity of 65±2% for 24 hours, then measuring the tensile strength in the machine direction (MD) (denoted as R_{M}), the tensile strength in the transverse direction (TD) (denoted as R_{T}), the tensile elongation in the MD direction (denoted as E_{M}), and the tensile elongation in the TD direction (denoted as E_{T}) of the sample respectively; then calculating the initial toughness Z₀ according to the formula;
(2) then exposing the sample to a dry heat atmosphere at 90±1°C for 6 hours, followed by cooling under the conditions of 25±1°C and the relative humidity of 65±2% for 24 hours; and
(3) finally, repeating the operation in step (2), and after four additional treatments, measuring the tensile strength in the MD direction (denoted as R_{M5}), the tensile strength in the TD direction (denoted as R_{T5}), the tensile elongation in the MD direction (denoted as E_{M5}), and the tensile elongation in the TD direction (denoted as E_{T5}) of the sample respectively; and calculating Z₅ according to the formula;
the tensile resilience (RT) is tested by the FB1 method of a KES fabric style tester.

2. The flash fabric having a high tensile resilience according to claim 1, wherein the gram weight G of the flash fabric is less than 70 g/m².

3. The flash fabric having a high tensile resilience according to claim 1, wherein the tensile resilience of the flash fabric is 50%-55%.

4. The flash fabric having a high tensile resilience according to claim 1, wherein the tensile resilience of the flash fabric is 55%-60%.

5. The flash fabric having a high tensile resilience according to claim 1, wherein the aging toughness Z₅ of the flash fabric is 8-10 (N·m)/g.

6. The flash fabric having a high tensile resilience according to claim 1, wherein the aging toughness Z₅ of the flash fabric is 10-12 (N·m)/g.

7. The flash fabric having a high tensile resilience according to claim 1, wherein the aging toughness Z₅ of the flash fabric is 12-14 (N·m)/g.

8. The flash fabric having a high tensile resilience according to claim 1, wherein the toughness variation value ΔZ of the flash fabric is 15%-45%;
wherein ΔZ=[Z₀-Z₅]/Z₀×100%
Z₀ is the initial toughness, which is the sample's Z₀=[R_{M}×E_{M}+R_{T}×E_{T}]/G; and
Z₅ is the final toughness after high-temperature treatment, and Z₅=[R_{M5}×E_{M5}+R_{T5}×E_{T5}]/G.

9. The flash fabric having a high tensile resilience according to claim 8, wherein the toughness variation value ΔZ of the flash fabric is 15%-20%.

10. The flash fabric having a high tensile resilience according to claim 9, wherein the toughness variation value ΔZ of the flash fabric is 25%-30%.

11. The flash fabric having a high tensile resilience according to claim 1, **characterized by** exposing a polyethylene film material of the flash fabric to a dry heat atmosphere at 90°C for 6 hours, followed by cooling under the conditions of 25±1°C and the relative humidity of 65±2% for 24 hours; then measuring the transmittance T of the flash fabric to be 7%-15%;
the transmittance test is conducted according to GBT2410-2008, and the transmittance T is the ratio of the luminous flux passing through the sample to the luminous flux incident on the sample, expressed as a percentage.

12. The flash fabric having a high tensile resilience according to claim 11, wherein the light transmittance T of the flash fabric is 9%-10%.

13. The flash fabric having a high tensile resilience according to claim 11, wherein the light transmittance T of the flash fabric is 10%-11%.

14. The flash fabric having a high tensile resilience according to claim 1, wherein a polymer spinning raw material further comprises a spinning aid, and the spinning aid is nano-hollow carbon spheres loaded with zinc oxide.
